# EUROPÄISCHE PATENTSCHRIFT

(11) **EP 4 306 823 B1**
(45) Veröffentlichungstag und Bekanntmachung des Hinweises auf die Patenterteilung: **19.03.2025**
(21) Anmeldenummer: 23179096.5
(22) Anmeldetag: 14.06.2023
(51) Int. Cl.: F16H 25/00, F16D 13/38

(54) **STELLKRAFTKUPPLUNG**
ACTUATING FORCE COUPLING
EMBRAYAGE À FORCE DE RÉGLAGE

(30) Priorität: 30.06.2022 DE 102022206665
(43) Veröffentlichungstag der Anmeldung: 17.01.2024
(73) Patentinhaber: Siemens Mobility GmbH, 81739 München (DE)
(72) Erfinder: Vogt, Jens, 12587 Berlin (DE)
(74) Vertreter: Siemens Patent Attorneys

(56) Entgegenhaltungen:
- DE-A1- 3 600 196
- DE-A1- 4 427 809
- DE-U1- 8 402 949
- US-A- 4 842 225

## Beschreibung

Aus der Druckschrift DE 44 27 809 A1 ist eine mit einem Kugelgewindetrieb baulich vereinigte Reibkupplung bekannt, bei welcher ein drehsteif mit einer Spindelmutter des Kugelgewindetriebes verbundener Hohlzylinder, in welchem die Spindelmutter längsverschiebbar angeordnet ist, von zwei Kupplungsgehäuseteilen festgehalten wird, solange die der Reibkupplung eigene Stellkraft nicht überschritten wird. Dabei bauen Tellerfedern auf Reibflächen wirkende Reibkräfte auf, indem sie sich jeweils über Abdruckteile in Form von Führungsringen und einem jeweiligen Drucklager, an einem der Gehäuseteile und an der Spindelmutter derart abstützen, dass sich ein Kräftegleichgewicht einstellt.

Ferner ist aus der Druckschrift DE 36 00 196 A1 eine Sicherheitskupplung zum Schutz von Maschinen bzw. Antriebssträngen vor Drehmomenten und Drehmomentstößen, die das der Auslegung zugrunde gelegte Nenndrehmoment wesentlich übersteigen bekannt, bei der über Kontaktorgane und unter axialer Verspannung eine schlüssige Mitnahmeverbindung zwischen einem Primärteil und einem Sekundärteil bewirkt wird, welche bei Nennlast das vorgegebene Drehmoment überträgt und sich bei Überlast unter rollender oder gleitender Reibung löst. Dabei können als Kontaktorgane axiale Wälzlager oder Rollkörperkränze vorgesehen sein.

Die Erfindung betrifft eine Stellkraftkupplung, insbesondere für einen elektromechanischen Weichenantrieb im Bahnverkehr, mit einer um eine Axialrichtung der Stellkraftkupplung herum rotierbar antreibbaren Kupplungsnabe, in welcher eine Gewindespindel montierbar ist, wobei die Kupplungsnabe über eine Überlastkupplung mit einem rotierbaren Kupplungsgehäuse der Stellkraftkupplung mechanisch gekoppelt ist. Ferner betrifft die Erfindung eine elektromechanische Stelleinrichtung für einen Weichenantrieb sowie einen Weichenantrieb für den Bahnverkehr.

Belastbare und zuverlässige Weichen sind ein entscheidender Faktor für eine Verbesserung einer Streckennutzung im Bahnverkehr. Insbesondere bei den wachsenden Anforderungen an die modernen Bahnen, z. B. im Fernverkehr, wo auch hohe Geschwindigkeiten auf einem abzweigenden Gleis der Weiche gefahren werden. Aber auch im Nah- und Güterverkehr entstehen hohe Belastungen, welche auf die Weichen wirken. Ein Weichenantrieb spielt daher eine wichtige Rolle für eine Sicherheit im Bahnverkehr. Er sollte präzise arbeiten, zuverlässig und hoch belastbar sein, sowie wirtschaftlich und vielseitig im Nah- und Fernverkehr für Weichen möglichst aller Bauarten und Spurweiten einsetzbar sein.

Ein elektromechanischer Weichen(stell)antrieb hat insbesondere folgende Aufgaben sicher und zuverlässig zu erledigen. Ein Umstellen einer Weiche, ein Festhalten der Weichenzungen der Weiche in deren Endlagen, ein mechanisches Sichern des Weichenverschlusses, ein elektrisches/elektronisches Melden eines Stellvorgangs und einer Endlage der Weichenzungen an ein Stellwerk, ein Öffnen der Auffahrkupplung im Weichenantrieb beim Auffahren der Weiche durch ein Fahrzeug und Abgeben einer Auffahrmeldung an eine Überwachungseinrichtung, etc.

Nicht nur während eines Stellbetriebs des Weichenantriebs selbst, sondern auch abseits davon werden beim Überfahren der Weiche, insbesondere bei einem Auffahren der Weiche, mit einem Fahrzeug hohe Kräfte in den Weichenantrieb eingeleitet, welche die Stellkraftkupplung schädigen und so langfristig zum Ausfall der Stellkraftkupplung und somit des Weichenantriebs führen können. - Es ist daher eine Aufgabe der Erfindung, eine verbesserte Stellkraftkupplung für einen Weichenantrieb sowie einen verbesserten Weichenantrieb anzugeben.

Die Aufgabe der Erfindung ist mittels einer Stellkraftkupplung, insbesondere für einen elektromechanischen Weichenantrieb im Bahnverkehr, mittels einer elektromechanischen Stelleinrichtung für einen Weichenantrieb im Bahnverkehr, und mittels eines Weichenantriebs für den Bahnverkehr, gemäß den unabhängigen Ansprüchen gelöst. - Vorteilhafte Weiterbildungen, zusätzliche Merkmale und/oder Vorteile der Erfindung ergeben sich aus den abhängigen Ansprüchen und/oder der folgenden Beschreibung der Erfindung.

Untersuchungen von Weichenantrieben für den Bahnverkehr, welche eine bereits lange Einsatzdauer absolviert haben, haben gezeigt, dass ein derzeitiges Problem einer Lebensdauerbegrenzung der Weichenantriebe, trotz deren bereits hohen durchschnittlichen Lebensdauern, die während einer Lebensdauer eingeleiteten Kräfte in einen Weichenantrieb und dort insbesondere die in eine Stellkraftkupplung eingeleiteten Axialkräfte sind. Diese Axialkräfte schädigen insbesondere die dort eingesetzten dreiteiligen Axialrillenkugellager mit ihren zwei Axiallagerschalen und einem Kugelkäfig mit den Wälzkugeln.

Einem Funktionsprinzip einer Stellkraftkupplung folgend ergeben sich ferner während einer Stellkraftbegrenzung der Stellkraftkupplung kurze kraftfreie zeitliche Momente (rechter/linker Anschlag einer Überlastkupplung der Stellkraftkupplung). Dies führt bei den eingesetzten Axialrillenkugellagern zu einem Trennen eines mechanischen Kontaktverbands der Axiallagerschalen und des Kugelkäfigs.

D. h. bei einem Entlasten des Axialrillenkugellagers hebt sich dessen Kontaktverband für eine kurze Zeitspanne auf und bekommt ,Luft'. Der Kugelkäfig mit seinen Wälzkugeln fällt aus einer Rille einer Axiallagerschale heraus und erst bei einem Einsetzen einer Gegenlast fällt der Kugelkäfig schlagartig wieder in die betreffende Rille ein. Das Trennen des Kontaktverbands kann zu einer Beschädigung des Axialrillenkugellagers und damit zu einer weniger gut kontrollierbaren Funktion der Stellkraftkupplung führen.

Die erfindungsgemäße Stellkraftkupplung umfasst eine um eine Axialrichtung der Stellkraftkupplung herum rotierbar antreibbare Kupplungsnabe, in welcher eine Gewindespindel montierbar ist, wobei die Kupplungsnabe über eine Überlastkupplung mit einem rotierbaren Kupplungsgehäuse der Stellkraftkupplung mechanisch gekoppelt ist.

Erfindungsgemäß ist vorgesehen, dass
- das Kupplungsgehäuse mittels zweier koaxialer Kreuzrollenlager auf der Kupplungsnabe drehbar gelagert ist. D. h. natürlich auch umgekehrt, dass die Kupplungsnabe mittels der zwei koaxialen Kreuzrollenlager innen im Kupplungsgehäuse drehbar gelagert ist,
- die Kupplungsnabe radial innerhalb einer Überlastkupplung eingerichtet ist, wobei sich die Kupplungsnabe über ein betreffendes Kreuzrollenlager in einem betreffenden Druckstück der Überlastkupplung axial abstützt und wobei die zwei Druckstücke auf ein Lamellenpaket der Überlastkupplung axial vorgespannt einwirken,
- ein Kreuzrollenlager-Außenring des Kreuzrollenlagers innen in einem Druckstück der Überlastkupplung eingerichtet ist, wobei der Kreuzrollenlager-Außenring axial beidseitig oder axial einseitig im Druckstück festgelegt ist (dies kann z. B. mittels eines Absatzes innen am Druckstück und/oder eines Sicherungsrings innen im Druckstück erfolgen) und/oder sich der Kreuzrollenlager-Außenring radial teilflächig oder vollflächig innen im Druckstück abstützt, und
- ein Kreuzrollenlager-Innenring des Kreuzrollenlagers außen auf der Kupplungsnabe eingerichtet ist, wobei der Kreuzrollenlager-Innenring axial einseitig oder axial beidseitig auf der Kupplungsnabe festgelegt ist (dies kann z. B. mittels eines Absatzes außen an der Kupplungsnabe und/oder eines Sicherungsrings außen an der Kupplungsnabe erfolgen) und/oder sich der Kreuzrollenlager-Innenring radial teilflächig oder vollflächig auf der Kupplungsnabe abstützt.

In einem montierten Zustand der Kupplungsnabe auf der Gewindespindel bilden diese eine drehfeste Spindel-Nabe-Verbindung, d. h. eine Rotationsbewegung der Kupplungsnabe ist auf die Gewindespindel übertragbar. - D. h. ist die Stellkraftkupplung z. B. auf der Gewindespindel eines Weichenantriebs montiert, so kann die von der Stellkraftkupplung rotierbar antreibbare Gewindespindel mittels eines auf ihr eingerichteten Kugelgewindetriebs ihre Rotationsbewegung in eine lineare Stellbewegung des Kugelgewindetriebs abseits der Stellkraftkupplung wandeln. - Alternativ kann der Kugelgewindetrieb zwischen der Kupplungsnabe und der Gewindespindel eingerichtet sein.

Gemäß der Erfindung ist also eine Dreiteiligkeit der Axialrillenkugellager dergestalt ein Problem, dass die zwei Lagerschalen und der Kugelkäfig als eine Baugruppe einen losen Kontaktverband bilden, welcher nicht über einen Formschluss der drei Bauteile zusammengehalten ist. - Gemäß der Erfindung ergibt sich eine einteilige Lösung in Form eines Kreuzrollenlagers als ein formschlüssiger Montageverbund einer Baugruppe aus zwei Lagerschalen mit einem z. B. integrierten Kreuzrollenkäfig mit den Wälzzylinderrollen. Hierbei wird die Auflösung des Montageverbunds vermieden. Der konstruktive Aufbau von Kreuzrollenlagern gewährleistet, dass der Montageverbund auch dann (nicht nur axial) erhalten bleibt, wenn keine axiale Kraftbelastung anliegt. D. h. ein Kreuzrollenlager kann keine ,Luft' bekommen, da der Montageverbund auch in einem axiallastfreien Zustand gegeben ist.

Bei einem Kreuzrollenlager sind einander direkt benachbarte Wälzzylinderrollen jeweils senkrecht zueinander orientiert (X-Anordnung) und laufen in einer rechtwinkligen Laufbahn des Kreuzrollenlagers. Zwischen jeweils zwei zueinander direkt benachbarten Wälzzylinderrollen befindet sich z. B. ein Distanzstück, welches diese in Umfangsrichtung voneinander trennt. Das Kreuzrollenlager ist steif und belastbar, hat eine hohe Laufgenauigkeit und kann ein Normalspiel aufweisen, spielarm oder mechanisch vorgespannt sein.

Das Kreuzrollenlager überträgt aufgrund der in Umfangsrichtung der Stellkraftkupplung umlaufenden X-Anordnung seiner Wälzzylinderrollen Kräfte aus beiden Axialrichtungen, Kräfte aus einer beliebigen radialen Richtung, Kippmomentbelastungen sowie beliebige Lastkombinationen. Dadurch lassen sich Konstruktionen mit zwei Lagerstellen (ohne eine Überbestimmung) aus dem Stand der Technik auf eine einzige Lagerstelle ohne eine Überbestimmung reduzieren. - In Ausführungsformen ist das jeweilige Kreuzrollenlager selbst als eine einteilig zusammengehaltene Baugruppe, als ein im Wesentlichen formschlüssiger Montageverbund, und/oder als ein spielarmes oder insbesondere ein mechanisch vorgespanntes Kreuzrollenlager ausgebildet.

Die Stellkraftkupplung kann derart ausgebildet sein, dass in einem Stellbetrieb der Stellkraftkupplung die Überlastkupplung im Wesentlichen geschlossen bleibt. Im Stellbetrieb der Stellkraftkupplung rotiert die Kupplungsnabe die Gewindespindel und stellt dieser eine Stellkraft zur Verfügung. Die Stellkraft stammt aus dem rotierbaren Kupplungsgehäuse, welches über die geschlossene Überlastkupplung im Wesentlichen drehfest mit der Kupplungsnabe verbunden ist.

Ferner kann die Stellkraftkupplung derart ausgebildet sein, dass bei einem Begrenzen einer Stellkraft der Gewindespindel durch die Stellkraftkupplung, die Überlastkupplung gelöst ist. Beim Begrenzen der Stellkraft, z. B. weil die Gewindespindel nicht mehr weiterrotiert werden kann (z. B. Stelleinrichtung (vgl. unten) in Endlage (erster oder zweiter Anschlag), ggf. auch Endlage(n) der Weichenzungen oder Endlage des Herzstücks)), begrenzt die gelöste Überlastkupplung eine von der Kupplungsnabe auf die Gewindespindel aufgeprägte Stellkraft.

Des Weiteren kann die Stellkraftkupplung derart ausgebildet sein, dass beim Begrenzen der Stellkraft die axial gegeneinander vorgespannten Lamellen der Überlastkupplung aneinander vorbeigleiten. D. h. die Lamellen der Überlastkupplung sind beim Begrenzen der Stellkraft bevorzugt nicht ausrückbar, sondern behalten ihre gegenseitige Vorspannkraft. Beim Begrenzen der Stellkraft wird eine Umfangskraft zwischen den Lamellen größer als eine gegenseitige Haftkraft aufgrund ihrer mechanischen Vorspannkraft.

Die Überlastkupplung ist als eine Lamellen-Überlastkupplung ausgebildet.

Das Lamellenpaket der Überlastkupplung kann axial zwischen den Kreuzrollenlagern eingerichtet sein. Bevorzugt trägt die Kupplungsnabe radial außen die wenigstens eine Innenlamelle, und hält das Kupplungsgehäuse radial innen die wenigstens eine Außenlamelle der Überlastkupplung. Und natürlich ist die jeweilige Innenlamelle und die jeweilige Außenlamelle drehfest auf der Kupplungsnabe bzw. im Kupplungsgehäuse vorgesehen und dort axial verschieblich gelagert.

Das Kreuzrollenlager kann an lediglich zwei oder lediglich drei in Umfangsrichtung der Stellkraftkupplung umlaufenden Eckbereichen in der Stellkraftkupplung festgelegt sein. Dies betrifft natürlich bevorzugt beide Kreuzrollenlager. In einem axial-radialen Halbschnitt der Stellkraftkupplung kann das Kreuzrollenlager wenigstens an einander diagonal gegenüberliegenden Eckbereichen festgelegt sein. Dies betrifft natürlich wiederum bevorzugt beide Kreuzrollenlager. Das Kreuzrollenlager kann radial außen axial einseitig oder axial beidseitig, und radial innen axial beidseitig oder axial einseitig in der Stellkraftkupplung festgelegt sein.

Die zwei Druckstücke können axial außen jeweils von einer Vorspanneinrichtung gegeneinander axial vorgespannt in der Stellkraftkupplung eingerichtet sein. Hierbei ist die betreffende Vorspanneinrichtung insbesondere eine Tellerfeder oder eine Tellerfederanordnung umfassend wenigstens zwei Tellerfedern. Eine mechanische Vorspannung der jeweiligen Vorspanneinrichtung kann von einem jeweils axial außen an der Vorspanneinrichtung eingerichteten Einstellglied einstellbar und aufrechterhalten sein. Mittels eines Einstellglieds ist eine mechanische Vorspannung wenigstens der betreffenden Vorspanneinrichtung einstellbar. Das jeweilige Einstellglied kann innen im Kupplungsgehäuse eingerichtet sein, wobei das Einstellglied bevorzugt mittels einer Einstellverschraubung in Axialrichtung verstellbar im Kupplungsgehäuse eingerichtet ist.

Die Erfindung ist im Folgenden anhand von Ausführungsbeispielen unter Bezugnahme auf die beigefügte schematische und nicht maßstabsgetreue Zeichnung näher erläutert. Abschnitte, Elemente, Bauteile, Einheiten, Komponenten und/oder Schemata, welche eine identische, univoke oder analoge Ausbildung und/ oder Funktion besitzen, sind in der Figurenbeschreibung (s. u.), der Bezugszeichenliste, den Patentansprüchen und in den Figuren (Fig.) der Zeichnung mit denselben Bezugszeichen gekennzeichnet. Eine mögliche, in der Erfindungsbeschreibung (s. o.) nicht erläuterte, in der Zeichnung nicht dargestellte und/oder nicht abschließende Alternative, eine statische und/ oder kinematische Umkehrung, eine Kombination etc. zu den Ausführungsbeispielen der Erfindung bzw. einer Komponente, einem Schema, einer Einheit, einem Bauteil, einem Element oder einem Abschnitt davon, kann ferner der Bezugszeichenliste und/oder der Figurenbeschreibung entnommen werden.

Bei der Erfindung kann ein Merkmal (Abschnitt, Element, Bauteil, Einheit, Komponente, Funktion, Größe etc.) positiv, d. h. vorhanden, oder negativ, d. h. abwesend, ausgestaltet sein. In dieser Spezifikation (Beschreibung (Erfindungsbeschreibung (s. o.), Figurenbeschreibung (s. u.)), Bezugszeichenliste, Patentansprüche, Zeichnung) ist ein negatives Merkmal als Merkmal nicht explizit erläutert, wenn nicht gemäß der Erfindung Wert daraufgelegt ist, dass es abwesend ist. D. h. die tatsächlich gemachte und nicht eine durch den Stand der Technik konstruierte Erfindung darin besteht, dieses Merkmal wegzulassen.

Ein Merkmal dieser Spezifikation kann nicht nur in einer angegebenen Art und/oder Weise, sondern auch in einer anderen Art und/oder Weise angewendet sein (Isolierung, Zusammenfassung, Ersetzung, Hinzufügung, Alleinstellung, Weglassung etc.). Insbesondere ist es möglich, anhand eines Bezugszeichens und einem diesem zugeordneten Merkmal bzw. vice versa, in der Beschreibung, der Bezugszeichenliste, den Patentansprüchen und/oder der Zeichnung, ein Merkmal in den Patentansprüchen und/oder der Beschreibung zu ersetzen, hinzuzufügen oder wegzulassen. Darüber hinaus kann dadurch ein Merkmal in einem Patentanspruch ausgelegt und/oder näher spezifiziert werden.

Die Merkmale der Beschreibung sind (angesichts des (zunächst meist unbekannten) Stands der Technik) auch als optionale Merkmale interpretierbar; d. h. ein jedes Merkmal kann als ein fakultatives, arbiträres oder bevorzugtes, also als ein nicht verbindliches, Merkmal aufgefasst werden. So ist eine Herauslösung eines Merkmals, ggf. inkl. seiner Peripherie, aus einem Ausführungsbeispiel möglich, wobei dieses Merkmal dann auf einen verallgemeinerten Erfindungsgedanken übertragbar ist. Das Fehlen eines Merkmals (negatives Merkmal) in einem Ausführungsbeispiel zeigt, dass das Merkmal in Bezug auf die Erfindung optional ist. Ferner ist bei einem Artbegriff für ein Merkmal auch ein Gattungsbegriff für das Merkmal mitlesbar (ggf. weitere hierarchische Gliederung in Untergattung etc.), wodurch, z. B. unter Beachtung von Gleichwirkung und/oder Gleichwertigkeit, eine Verallgemeinerung des Merkmals möglich ist.

In den lediglich beispielhaften Figuren (Fig.) zeigen:
die Fig. 1 eine Draufsicht auf eine herkömmliche Bahnweiche, deren Weichenzungen zum Stellen ihrer Fahrwege von einem Stellschieber eines Weichenantriebs der Weiche betätigbar sind,
die Fig. 2 eine Draufsicht auf einen oben offenen Weichenantrieb, wobei das mechanische, elektrische und elektromechanische Innere des Weichenantriebs lediglich grob schematisch dargestellt ist, und
die Fig. 3 eine zentrale und axial-radiale Schnittansicht durch eine Stellkraftkupplung für einen Weichenantrieb im Bahnverkehr, z. B. den Weichenantrieb aus der Fig. 2.

Obwohl die Erfindung oben und im Folgenden detaillierter durch bevorzugte Ausführungsbeispiele näher beschrieben und illustriert ist, so ist die Erfindung nicht durch die offenbarten Ausführungsbeispiele eingeschränkt, sondern ist von grundlegenderer Natur. Andere Variationen können hieraus und/oder aus Obigem (Erfindungsbeschreibung) abgeleitet werden ohne den Schutzumfang der Erfindung zu verlassen.

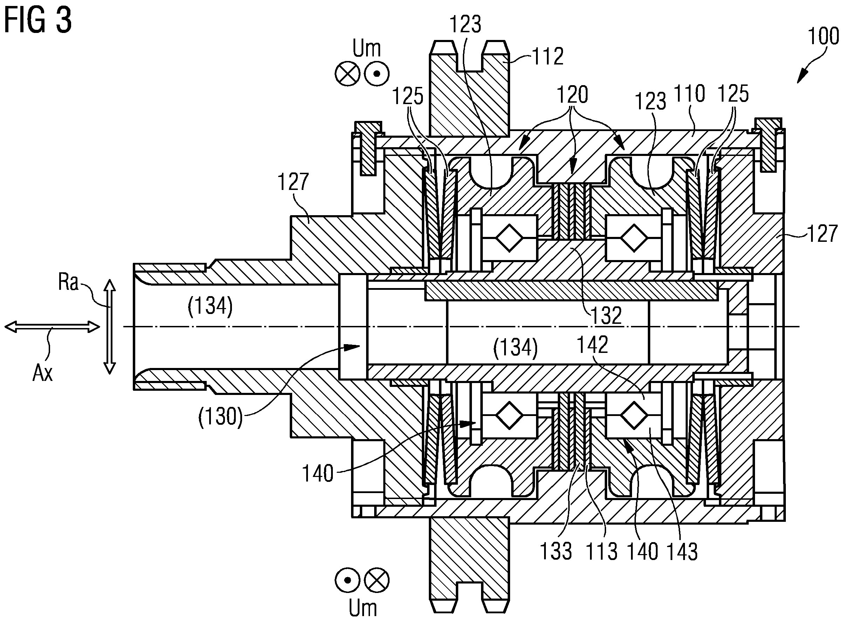

Die Erfindung ist im Folgenden anhand von Ausführungsbeispielen einer spezifischen Ausführungsform (Fig. 3) einer Variante einer Stellkraftkupplung 100 für einen Weichenantrieb 1 näher erläutert. In der Zeichnung sind nur diejenigen räumlichen Abschnitte eines Gegenstands der Erfindung dargestellt, welche für ein Verständnis der Erfindung notwendig sind. Die Erläuterung der Erfindung anhand der Zeichnung bezieht sich im Folgenden auf eine Axialrichtung Ax, eine Radialrichtung Ra und eine Umfangsrichtung Um der Stellkraftkupplung 100.

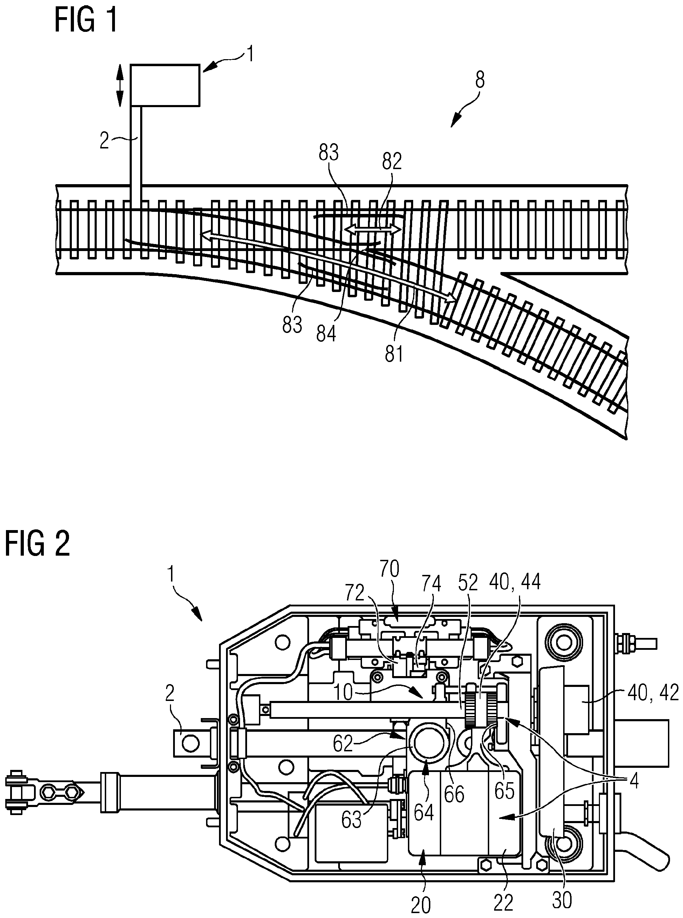

Die Fig. 1 zeigt eine Weiche 8, deren Schienen einen ersten Fahrweg 81 und einen zweiten Fahrweg 82 vorgeben. Der erste Fahrweg 81 ist derjenige, welcher bei einer entsprechenden Stellung der Weiche 8 von einem Gleis in Kurvenfahrt wegführt, während der zweite Fahrweg 82 geradeaus verläuft. Um die Weiche 8 zu stellen, ist ein Weichenantrieb 1 mit einem Stellschieber 2 vorgesehen, welcher in lateraler Richtung (Doppelpfeil am Weichenantrieb 1) hin- und herbewegbar ist und an einer inneren Weichenzunge und einer äußeren Weichenzunge der Weiche 8 befestigt ist. Auf diese Weise lassen sich die Weichenzungen betätigen, wodurch die Fahrwege 81, 82 für ein Bahnfahrzeug gestellt werden können. Die Sollpositionen des Stellschiebers 2 sind durch die Endlagen der Weichenzungen vorgegeben.

Zur zusätzlichen Führung sind Radlenker 83 sowie ein Herzstück 84 in der Weiche 8 eingerichtet. Diese verringern ein Risiko, dass ein Fahrzeug auf der Weiche 8 entgleist. Dies gilt insbesondere auch, wenn die Weiche 8 durch ein Fahrzeug aufgefahren wird. Ein Auffahren erfolgt, wenn sich aus einer Fahrtrichtung ein Fahrzeug nähert, obwohl die Weiche 8 für die andere Fahrtrichtung gestellt ist. - Während eines Betriebs des Weichenantriebs 1 treten z. B. durch Stellbewegungen, das Überfahren von Fahrzeugen und das Auffahren der Weiche 8 Stöße auf, welche insbesondere über den Stellschieber 2 in den Weichenantrieb 1 eingeleitet werden. Insbesondere ein Stellmodul 10 (vgl. Fig. 2) für den Stellschieber 2 muss diese Stöße auffangen, wodurch die für eine Spindel-Nabe-Verbindung 130 (vgl. Fig. 3) einer Stellkraftkupplung 42 (vgl. Fig. 2), 100 (vgl. Fig. 3) einer Stelleinrichtung 40 des Stellschiebers 2 zum Einsatz kommende Lagerung belastet wird.

Die Fig. 2 zeigt einen beispielhaften Weichenantrieb 1 mit einer aus dem Stellmodul 10 und einem Antriebsmodul 20 bestehenden Verstelleinrichtung 4 in einer ersten Endlage (Anschlag 65, vgl. unten), aus welcher der Weichenantrieb 1 in eine zweite Endlage (Anschlag 66) überführbar ist. Der Weichenantrieb 1 kann rechts oder links von einer Weiche 8 an einem Gleis positioniert sein und ist zum mechanischen Anschluss an hin- und herbewegbare Weichenteile, wie z. B. an Weichenzungen oder auch an ein betätigbares Herzstück 84, geeignet. Im Folgenden sei angenommen, dass der Weichenantrieb 1 mit seinem Stellschieber 2 an zwei Weichenzungen einer Weiche 8 mechanisch angeschlossen ist (vgl. Fig. 1).

Ein z. B. als ein Drehstrommotor 22 ausgebildeter Antriebsmotor 22 des Antriebsmoduls 20 rotiert über eine Getriebestufe 30, z. B. mit einem Ritzel, einem Zwischenrad und einem Großrad, oder einem Kettenantrieb (beides in Fig. 2 nicht dargestellt), eine Stellkraftkupplung 42. Eine Spindel-Nabe-Verbindung (nicht dargestellt) der Stellkraftkupplung 42 ist mit einer Gewindespindel 52 ausgebildet und weist eine auf der Gewindespindel 52 drehfest sitzende Kupplungsnabe der Stellkraftkupplung 42 auf. Die Stellkraftkupplung 42 wirkt auf einen Auffahrmechanismus 62, auch als Festhaltekupplungseinrichtung 62 bezeichenbar, des Stellmoduls 10. Der Auffahrmechanismus 62 umfasst ein Kupplungsgehäuse 63 und eine einstellbare Festhaltekupplung 64.

Beim Anlaufen des Antriebsmotors 22 rotiert die Kupplungsnabe und bewegt eine auf der Gewindespindel 52 drehsicher längsgeführte Verstellvorrichtung 44 der Stelleinrichtung 40 aus der dargestellten ersten Endlage, bei der die Verstellvorrichtung 44 an einem (ersten) Anschlag 65 des Stellmoduls 10 ansitzt, über einen Stellweg in einer Stellrichtung auf der Gewindespindel 52, bis sie an einem (zweiten) Anschlag 66 des Stellmoduls 10 ansitzt (also nach links in der Fig. 2). Hierfür ist zwischen der Stelleinrichtung 40 und der Gewindespindel 52 ein Kugelgewindetrieb eingerichtet, welcher die Rotationsbewegung der Gewindespindel 52 in eine lineare Stellbewegung der Stelleinrichtung 40 wandelt bzw. übersetzt. Das Kupplungsgehäuse 63 ist baulich vereinigt mit der einstellbaren Festhaltekupplung 64 des Auffahrmechanismus 62.

Bis zu einem Anschlagen der Verstellvorrichtung 44 am zweiten Anschlag 66 wird das Kupplungsgehäuse 63 aus der dargestellten ersten Endlage nach links in Stellrichtung mitgenommen und bewegt dabei über die Festhaltekupplung 64 den Stellschieber 2 aus der dargestellten ersten Endlage, in der sich der Stellschieber 2 weitgehend in einem Antriebsgehäuse 12 des Weichenantriebs 1 befindet, in eine zweite Endlage, in welcher der Stellschieber 2 am weitesten aus dem Antriebsgehäuse 12 ausgefahren ist. Hier nicht dargestellt ist ein Au-ßenverschluss des Stellschiebers 2, mit welchem der Stellschieber 2 an die in den Stellrichtungen hin und herbewegbaren Weichenzungen mechanisch anschließbar ist.

Beim Rücklauf des Weichenantriebs 1 bzw. des Stellschiebers 2 aus der zweiten Antriebslage (Verstellvorrichtung 44 sitzt am zweiten Anschlag 66 an) in die in der Fig. 2 gezeigte erste Antriebslage (Verstellvorrichtung 44 sitzt am ersten Anschlag 65 an) durchläuft die Stellkraftkupplung 42 den Stellweg zwischen den Anschlägen 66, 65 des Stellmoduls 10 in umgekehrter Richtung. Die Verstellvorrichtung 44 nimmt dabei bis zum ersten Anschlag 65 den Stellschieber 2 über das Kupplungsgehäuse 63 und die Festhaltekupplung 64 mit.

Die Festhaltekupplung 64 ist dazu ausgelegt, den Weichenantrieb 1 insbesondere bei einem Auffahren der Weiche 8 vor Beschädigungen zu schützen. Die Festhaltekupplung 64 spricht dann an und gibt den Stellschieber 2 frei, wenn die Weiche 8 aufgefahren wird und dabei hohe Kräfte von außen her in den Weichenantrieb 1 hineingetragen werden. Allerdings kann die Festhaltekupplung 64 nicht verhindern, dass auf die Lagerung (in Fig. 2 nicht dargestellt) der Stellkraftkupplung 42 Stöße übertragen werden.

Der Stellschieber 2 ist im Weichenantrieb 1 in seinen beiden Endlagen bevorzugt kraft- und formschlüssig festlegbar. Hierzu dienen ein erster Sperrschieber 72 und ein zweiter Sperrschieber 74 einer Sperrvorrichtung 70, wobei der erste Sperrschieber 72 für die erste Endlage in eine entsprechende erste Ausnehmung (nicht dargestellt) des Stellschiebers 2 einfallen kann, und der zweite Sperrschieber 74 für die zweite Endlage in eine entsprechende zweite Ausnehmung des Stellschiebers 2 einfallen kann (nicht dargestellt). Dies geschieht z. B. mittels Federvorrichtungen. - Beim Erreichen einer Endlage können wiederum Stöße auftreten, welche durch den Stellschieber 2 in die Lagerung der Stellkraftkupplung 42 eingeleitet werden und diese mechanisch belasten.

Bei einem Auffahren der durch den Weichenantrieb 1 gesteuerten Weiche 8 (nur möglich bei der Steuerung von Weichenzungen, nicht möglich bei der Steuerung eines Herzstückes) werden nach dem Lösen eines Weichenverschlusses von der Weichenseite her über den Stellschieber 2 erhebliche Kräfte in den Weichenantrieb 1 eingeleitet. Sobald dabei die Festhaltekraft der Festhaltekupplung 64 überschritten wird, setzt sich der Stellschieber 2 unter der Einwirkung der von außen auf ihn einwirkenden Kraft in die eine oder andere Richtung in Bewegung, in der vorliegenden Darstellung der Fig. 2 nach links. Dabei wird ein Federelement der Festhaltekupplung 64 mechanisch vom Stellschieber 2 entkoppelt.

Die Fig. 3 zeigt eine Stellkraftkupplung 100 für einen Weichenantrieb 1, z. B. den in der Fig. 2 dargestellten oder einen anderen. Die Stellkraftkupplung 100 weist ein einteiliges, einstückiges oder integrales Kupplungsgehäuse 110 mit z. B. einem darauf montiertem Antriebsrad 112 auf, welches an zwei einander gegenüberliegenden Stirnseiten mit jeweils einem Einstellglied 127, welche in der vorliegenden Ausführungsform vorzugsweise als Einstellmuttern 127 ausgebildet sind, verschlossen ist. Die Einstellglieder 127 weisen eine Durchgangsöffnung auf, durch welche eine Gewindespindel 134 (in der Fig. 3 nicht dargestellt) hindurch durchführbar (Fig. 3 links) bzw. hineinerstreckbar (Fig. 3 rechts) ist.

Die Gewindespindel 134 ist im Bereich des Kupplungsgehäuses 110 von einer Kupplungsnabe 132 als einen Antrieb der Gewindespindel 134 umschließbar, wobei sich an deren äußerer Umfangsfläche ein jedes Einstellglied 127 durch ein Lager, vorliegend als ein Gleitlager ausgebildet, abstützt bzw. vice versa. Ein anderes Lager ist natürlich anwendbar. Die Kupplungsnabe 132 lässt sich auf diese Weise im Kupplungsgehäuse 110 nicht nur verdrehen, sondern auch in Axialrichtung Ax verschieben. Die Gewindespindel 134 und die Kupplungsnabe 132 bilden dabei eine drehfeste Spindel-Nabe-Verbindung 130, z. B. mittels einer Passfeder.

Zwischen der Kupplungsnabe 132 und einer Innenseite des Kupplungsgehäuses 110 ist eine Überlastkupplung 120 ausgebildet. In der vorliegenden Ausführungsform ist die Überlastkupplung 120 eine Lamellenkupplung mit Außenlamellen 113 des Kupplungsgehäuses 110 und Innenlamellen 133 der Kupplungsnabe 132. Hierbei sind die Außenlamellen 113 und die Innenlamellen 133 als Reiblamellen 113, 133 (Lamellenpaket 113, 133) ausgebildet, wobei die Außenlamellen 113 axial Ax verschieblich und drehfest innen im Kupplungsgehäuse 110 und die Innenlamellen 133 axial Ax verschieblich und drehfest außen auf Kupplungsnabe 131 vorgesehen sind.

Das Lamellenpaket 113, 133 der Überlastkupplung 120 ist durch zwei Druckstücke 123 der Überlastkupplung 120 begrenzt, die in der vorliegenden Ausführungsform als Druckringe 123 ausgebildet sind. Zwischen jedem Einstellglied 127 und einem betreffenden Druckstück 123 ist eine Vorspanneinrichtung 125 angeordnet, welche in Abhängigkeit von jedem Einstellglied 127 Vorspannkräfte auf die Druckstücke 123 ausübt. Die Vorspanneinrichtung 125 ist in der vorliegenden Ausführungsform vorzugsweise eine Federeinrichtung 125, insbesondere eine Tellerfederanordnung 125. Andere Federn oder Federeinrichtungen sind natürlich anwendbar.

Durch ein Verdrehen eines oder beider Einstellglieder 127 kann eine Vorspannkraft und somit auch eine Auslösekraft der Überlastkupplung 120 eingestellt werden. In einem bevorzugten Ausführungsbeispiel werden beide Einstellglieder 127 um einen gleichen Betrag verdreht, sodass gleiche Vorspannkräfte auftreten. Mit einer ungleichen Einstellung können Richtungsabhängigkeiten ausgeglichen werden. - Ferner stützt sich die Kupplungsnabe 132 (Kreuzrollenlager-Innenring 142) über zwei Kreuzrollenlager 140 in dem jeweiligen Druckstück 123 (Kreuzrollenlager-Außenring 143) ab, wobei die eigentliche Überlastkupplung 120 zwischen den Kreuzrollenlagern 140 in der Stellkraftkupplung 100 eingerichtet ist. Zu den Kreuzrollenlagern 140 vgl. oben die Erfindungsbeschreibung.

## Patentansprüche

1. Stellkraftkupplung (100), insbesondere für einen elektromechanischen Weichenantrieb (1) im Bahnverkehr, mit
einer um eine Axialrichtung (Ax) der Stellkraftkupplung (100) herum rotierbar antreibbaren Kupplungsnabe (132), in welcher eine Gewindespindel (134) montierbar ist, wobei die Kupplungsnabe (132) über eine Überlastkupplung (120) mit einem rotierbaren Kupplungsgehäuse (110) der Stellkraftkupplung (100) mechanisch gekoppelt ist, wobei
• das Kupplungsgehäuse (110) mittels zweier koaxialer Kreuzrollenlager (140, 140) auf der Kupplungsnabe (132) drehbar gelagert ist,
• die Kupplungsnabe (132) radial (Ra) innerhalb der Überlastkupplung (120) eingerichtet ist, wobei sich die Kupplungsnabe (132) über ein betreffendes Kreuzrollenlager (140) in jeweils einem Druckstück (123) der Überlastkupplung (120) abstützt und die zwei Druckstücke (123, 123) auf ein Lamellenpaket (113, 133; ...) der Überlastkupplung (120) axial (Ax) vorgespannt einwirken,
• ein Kreuzrollenlager-Außenring (143) des Kreuzrollenlagers (140) innen in einem Druckstück (123) der Überlastkupplung (120) eingerichtet ist, wobei der Kreuzrollenlager-Außenring (143) axial (Ax) beidseitig oder axial (Ax) einseitig im Druckstück (123) festgelegt ist und/oder sich der Kreuzrollenlager-Außenring (143) radial (Ra) teilflächig oder vollflächig innen im Druckstück (123) abstützt, und **dadurch gekennzeichnet, dass**
• ein Kreuzrollenlager-Innenring (142) des Kreuzrollenlagers (140) außen auf der Kupplungsnabe (132) eingerichtet ist, wobei der Kreuzrollenlager-Innenring (142) axial (Ax) einseitig oder axial (Ax) beidseitig auf der Kupplungsnabe (132), festgelegt ist und/oder sich der Kreuzrollenlager-Innenring (142) radial (Ra) teilflächig oder vollflächig auf der Kupplungsnabe (132) abstützt.

2. Stellkraftkupplung (100) gemäß vorhergehendem Anspruch, **dadurch gekennzeichnet, dass** das jeweilige Kreuzrollenlager (140) selbst als:
• eine einteilig zusammengehaltene Baugruppe (140),
• ein im Wesentlichen formschlüssiger Montageverbund (140), und/oder
• ein spielarmes oder ein mechanisch vorgespanntes Kreuzrollenlager (140)
ausgebildet ist.

3. Stellkraftkupplung (100) gemäß einem der vorhergehenden Ansprüche, **dadurch gekennzeichnet, dass** die Stellkraftkupplung (100) derart ausgebildet ist, dass:
• in einem Stellbetrieb der Stellkraftkupplung (100) die Überlastkupplung (120) im Wesentlichen geschlossen bleibt,
• bei einem Begrenzen einer Stellkraft der Gewindespindel (134) durch die Stellkraftkupplung (100), die Überlastkupplung (120) gelöst ist, und/oder
• beim Begrenzen der Stellkraft die axial (Ax) gegeneinander vorgespannten Lamellen (113, 133) der Überlastkupplung (120) aneinander vorbeigleiten.

4. Stellkraftkupplung (100) gemäß einem der vorhergehenden Ansprüche, **dadurch gekennzeichnet, dass**
• das Lamellenpaket (113, 133; ...) der Überlastkupplung (120) axial (Ax) zwischen den Kreuzrollenlagern (140) eingerichtet ist.

5. Stellkraftkupplung (100) gemäß einem der vorhergehenden Ansprüche, **dadurch gekennzeichnet, dass**:
• das Kreuzrollenlager (140) an lediglich zwei oder lediglich drei in Umfangsrichtung (Um) der Stellkraftkupplung (100) umlaufenden Eckbereichen in der Stellkraftkupplung (100) festgelegt ist,
• in einem axial-radialen (Ax-Ra) Halbschnitt der Stellkraftkupplung (100), das Kreuzrollenlager (140) wenigstens an einander diagonal gegenüberliegenden Eckbereichen festgelegt ist, und/oder
• das Kreuzrollenlager (140) radial (Ra) außen axial (Ax) einseitig oder axial (Ax) beidseitig, und radial (Ra) innen axial (Ax) beidseitig oder axial (Ax) einseitig in der Stellkraftkupplung (100) festgelegt ist.

6. Stellkraftkupplung (100) gemäß einem der vorhergehenden Ansprüche, **dadurch gekennzeichnet, dass**:
• die zwei Druckstücke (123, 123) axial (Ax) außen jeweils von einer Vorspanneinrichtung (125, 125) gegeneinander axial (Ax) vorgespannt in der Stellkraftkupplung (100) eingerichtet sind,
• eine mechanische Vorspannung der jeweiligen Vorspanneinrichtung (125, 125) von einem jeweils axial (Ax) außen an der Vorspanneinrichtung (125, 125) eingerichteten Einstellglied (127, 127) einstellbar und aufrechterhalten ist, und/oder
• das jeweilige Einstellglied (127) innen im Kupplungsgehäuse (110) eingerichtet ist, wobei das Einstellglied (127) bevorzugt mittels einer Einstellverschraubung in Axialrichtung (Ax) verstellbar im Kupplungsgehäuse (110) eingerichtet ist.

7. Elektromechanische Stelleinrichtung (4) für einen Weichenantrieb (1) im Bahnverkehr, **dadurch gekennzeichnet, dass** die Stelleinrichtung (4) einen Antriebsmotor (22) und eine Stellkraftkupplung (100) umfasst, wobei die Stellkraftkupplung (100) gemäß einem der vorhergehenden Ansprüche ausgebildet ist.

8. Weichenantrieb (1) für den Bahnverkehr, **dadurch gekennzeichnet, dass** der Weichenantrieb (1) eine Stelleinrichtung (4) und/oder eine Stellkraftkupplung (100) umfasst, wobei die Stelleinrichtung (4) und/oder die Stellkraftkupplung (100) gemäß einem der vorhergehenden Ansprüche ausgebildet ist.

## Claims

1. Actuating force coupling (100), in particular for an electromechanical switch drive (1) in rail traffic, with a coupling hub (132) which can be driven so as to be rotatable in an axial direction (Ax) about the actuating force coupling (100), in which coupling hub a threaded spindle (134) can be mounted, wherein the coupling hub (132) is mechanically coupled via an overload coupling (120) to a rotatable coupling housing (110) of the actuating force coupling (100), wherein
• the coupling housing (110) is rotatably mounted on the coupling hub (132) by means of two coaxial crossed roller bearings (140, 140),
• the coupling hub (132) is configured radially (Ra) within the overload coupling (120), wherein the coupling hub (132) is supported via a respective crossed roller bearing (140) in a pressure piece (123) of the overload coupling (120) in each case and the two pressure pieces (123, 123) act axially (Ax) upon a lamination stack (113, 133; ...) of the overload coupling (120) in a pretensioned manner,
• a crossed roller bearing outer ring (143) of the crossed roller bearing (140) is configured on the inside in a pressure piece (123) of the overload coupling (120), wherein the crossed roller bearing outer ring (143) is fixed axially (Ax) on both sides or axially (Ax) on one side in the pressure piece (123) and/or the crossed roller bearing outer ring (143) is radially (Ra) supported on the inside in the pressure piece (123) over part of the surface or over the entire surface and, **characterised in that**
• a crossed roller bearing inner ring (142) of the crossed roller bearing (140) is configured on the outside of the coupling hub (132), wherein the crossed roller bearing inner ring (142) is fixed axially (Ax) on one side or axially (Ax) on both sides to the coupling hub (132) and/or the crossed roller bearing inner ring (143) is radially (Ra) supported on the coupling hub (132) over part of the surface or over the entire surface.

2. Actuating force coupling (100) according to the preceding claim, **characterised in that** the respective crossed roller bearing (140) itself is designed as:
• a module (140) held together as a single piece,
• an assembly compound (140) which is essentially connected in the manner of a positive fit, and/or
• a crossed roller bearing (140) with minimal play or which is mechanically pretensioned.

3. Actuating force coupling (100) according to one of the preceding claims, **characterised in that** the actuating force coupling (100) is designed such that:
• in an actuating operation of the actuating force coupling (100) the overload coupling (120) remains essentially closed,
• when an actuating force of the threaded spindle (134) is restricted by way of the actuating force coupling (100), the overload coupling (120) is released, and/or
• when the actuating force is restricted, the laminations (113, 133) of the overload coupling (120), which laminations are axially (Ax) pretensioned relative to one another, glide past one another.

4. Actuating force coupling (100) according to one of the preceding claims, **characterised in that**
• the lamination stack (113, 133; ...) of the overload coupling (120) is configured axially (Ax) between the crossed roller bearings (140).

5. Actuating force coupling (100) according to one of the preceding claims, **characterised in that**:
• the crossed roller bearing (140) is fixed at only two or only three corner regions in the actuating force coupling (100) circulating in the circumferential direction (Um) of the actuating force coupling (100),
• in an axial/radial (Ax-Ra) half section of the actuating force coupling (100), the crossed roller bearing (140) is fixed at least at corner regions that diagonally oppose one another, and/or
• the crossed roller bearing (140) is fixed in the actuating force coupling (100) radially (Ra) to the outside axially (Ax) on one side or axially (Ax) on both sides, and radially (Ra) to the inside axially (Ax) on both sides or axially (Ax) on one side.

6. Actuating force coupling (100) according to one of the preceding claims, **characterised in that**:
• the two pressure pieces (123, 123) are configured in each case in the actuating force coupling (100) to be axially (Ax) pretensioned in each case on the outside relative to one another by a pretensioning facility (125, 125),
• a mechanical pretensioning of the respective pretensioning facility (125, 125) can be adjusted and is maintained by an adjustment element (127, 127) configured axially (Ax) on the outside of the pretensioning facility (125, 125) in each case, and/or
• the respective adjustment element (127) is configured on the inside of the coupling housing (110), wherein the adjustment element (127) is preferably configured in the coupling housing (110) so as to be adjustable in the axial direction (Ax) by means of an adjustment screw connection.

7. Electromechanical control facility (4) for a switch drive (1) in rail traffic, **characterised in that** the control facility (4) comprises a drive motor (22) and an actuating force coupling (100), wherein the actuating force coupling (100) is designed according to one of the preceding claims.

8. Switch drive (1) for rail traffic, **characterised in that** the switch drive (1) comprises a control facility (4) and/or an actuating force coupling (100), wherein the control facility (4) and/or the actuating force coupling (100) is designed according to one of the preceding claims.

## Revendications

1. Embrayage (100) à force de réglage, en particulier pour un entraînement (1) électromécanique d'aiguille du trafic sur voie, comprenant un moyeu (132) d'embrayage, qui peut être entraîné en rotation autour d'une direction (Ax) axiale de l'embrayage (100) à force de réglage et dans lequel une broche (134) filetée peut être montée, dans lequel le moyeu (132) d'embrayage est accouplé mécaniquement par un embrayage (120) à surcharge à une enveloppe (110) tournante de l'embrayage (100) à force de réglage, dans lequel
• l'enveloppe (110) de l'embrayage est montée tournante sur le moyeu (132) de l'embrayage au moyen de deux paliers (140, 140) coaxiaux à rouleaux croisés,
• le moyeu (132) de l'embrayage est monté radialement (Ra) à l'intérieur de l'embrayage (120) de surcharge, dans lequel le moyeu (132) de l'embrayage s'appuie par un palier (140) à rouleaux croisés le concernant dans respectivement une pièce (123) de pression ou de l'embrayage (120) de surcharge et les deux pièces (123, 123) de pression agissent en précontrainte axialement (Ax) sur un paquet (113, 133 ; ...) de lamelles de l'embrayage (120) de surcharge,
• une bague (143) extérieure de palier à rouleaux croisés du palier (140) à rouleaux croisés est montée à l'intérieur dans une pièce (123) de pression de l'embrayage (120) à surcharge, dans lequel la bague (143) extérieure du palier à rouleaux croisés est fixée axialement (Ax) des deux côtés ou axialement (Ax) d'un côté dans la pièce (123) de pression et/ou la bague (143) extérieure de palier à rouleaux croisés s'appuie radialement (Ra) sur une partie de la surface ou sur toute la surface à l'intérieur dans la pièce (123) de pression et **caractérisé en ce que**
• une bague (142) intérieure de palier à rouleaux croisés du palier (140) à rouleaux croisés est montée à l'extérieure sur le moyeu (132) de l'embrayage, dans lequel la bague (142) intérieure de palier à rouleaux croisés est fixée axialement (Ax) d'un côté ou axialement (Ax) des deux côtés au moyeu (132) de l'embrayage et/ou la bague (142) intérieure du palier à rouleaux croisés s'appuie radialement (Ra) sur une partie de la surface ou sur toute la surface du moyeu (132) de l'embrayage.

2. Embrayage (100) à force de réglage suivant la revendication précédente, **caractérisé en ce que** le palier (140) respectif à rouleaux croisés est constitué soi-même sous la forme :
• d'un module (140) maintenu ensemble en une pièce,
• d'un composite (140) de montage sensiblement à complémentarité de forme, et/ou
• d'un palier (140) à rouleaux croisés avec peu de jeu ou précontraint mécaniquement.

3. Embrayage (100) à force de réglage suivant l'une des revendications précédentes, **caractérisé en ce que** l'embrayage (100) à force de réglage est constitué, de manière à ce que :
• dans un fonctionnement de réglage de l'embrayage (100) à force de réglage, l'embrayage (120) à surcharge reste sensiblement fermé,
• lors d'une limitation de la force de réglage de la broche (134) filetée par l'embrayage (100) à force de réglage, l'embrayage (120) à surcharge est débrayé, et/ou
• lors d'une limitation de la force de réglage, les lamelles (113, 133) précontraintes les unes par rapport aux autres axialement (Ax) de l'embrayage (120) à surcharge glissent les unes contre les autres.

4. Embrayage (100) à force de réglage suivant l'une des revendications précédentes, **caractérisé en ce que**
• le paquet (113, 133 ; ...) de lamelles de l'embrayage (120) à surcharge est disposé axialement (Ax) entre les paliers (140) à rouleaux croisés.

5. Embrayage (100) à force de réglage suivant l'une des revendications précédentes, **caractérisé en ce que**
• le palier (140) à rouleaux croisés est fixé dans l'embrayage (100) à force de réglage en seulement deux ou seulement trois parties de coins faisant le tour dans le sens (Um) du pourtour de l'embrayage (100) à force de réglage,
• dans une demi-coupe axiale-radiale (Ax-Ra) de l'embrayage (100) à force de réglage, le palier (140) à rouleaux croisés est fixé au moins sur des parties de coins opposées diagonalement l'une à l'autre et/ou
• le palier (140) à rouleaux croisés est fixé radialement (Ra), axialement (Ax) à l'extérieur d'un côté ou axialement (Ax) des deux côtés et radialement (Ra) axialement (Ax) à l'intérieur des deux côtés ou axialement (Ax) d'un seul côté dans l'embrayage (100) à force de réglage.

6. Embrayage (100) à force de réglage suivant l'une des revendications précédentes, **caractérisé en ce que**
• les deux pièces (123, 123) de pression sont disposées axialement (Ax) à l'extérieur respectivement d'un dispositif (125, 125) de précontrainte en étant précontraintes axialement (Ax) l'une par rapport à l'autre dans l'embrayage (100) à force de réglage,
• une précontrainte mécanique du dispositif (125, 125) de précontrainte respectif est réglable et peut être maintenue par un élément (127, 127) de réglage monté respectivement axialement (Ax) à l'extérieur du dispositif (125, 125) de précontrainte, et/ou
• l'élément (127) respectif de réglage est monté à l'intérieur de l'enveloppe (110) de l'embrayage, dans lequel l'élément (127) de réglage est monté dans l'enveloppe (110) de l'embrayage, de préférence au moyen d'un vissage de réglage réglable dans la direction (Ax) axiale.

7. Dispositif (4) électromécanique de réglage pour un entraînement (1) d'aiguille du trafic sur voie, **caractérisé en ce que** le dispositif (4) de réglage comprend un moteur (22) d'entraînement et un embrayage (100) à force de réglage, dans lequel l'embrayage (100) à force de réglage est constitué suivant l'une des revendications précédentes.

8. Entraînement (1) d'aiguille pour le trafic sur voie, **caractérisé en ce que** l'entraînement (1) d'aiguille comprend un dispositif (4) de réglage et/ou un embrayage (100) à force de réglage, dans lequel le dispositif (4) de réglage et/ou l'embrayage (100) à force de réglage est constitué suivant l'une des revendications précédentes.
